(19) Europäisches Patentamt
European Patent Office
Office européen des brevets

(11) **EP 2 872 356 B1**

(12) **FASCICULE DE BREVET EUROPEEN**

(45) Date de publication et mention de la délivrance du brevet:
**05.10.2016 Bulletin 2016/40**

(51) Int Cl.:
**H01M 8/04992** *(2016.01)* **H01M 16/00** *(2006.01)*
**B60L 11/18** *(2006.01)*

(21) Numéro de dépôt: **13735314.0**

(22) Date de dépôt: **11.07.2013**

(86) Numéro de dépôt international:
**PCT/EP2013/064746**

(87) Numéro de publication internationale:
**WO 2014/009505 (16.01.2014 Gazette 2014/03)**

(54) **MOTORISATION DE VEHICULE AUTOMOBILE INCLUANT UNE PILE A COMBUSTIBLE ET UN SYSTEME DE STOCKAGE D'ENERGIE**

ANTRIEBSEINHEIT FÜR KRAFTFAHRZEUGE MIT EINER BRENNSTOFFZELLE UND EINEM ENERGIESPEICHERSYSTEM

MOTOR VEHICLE DRIVE UNIT INCLUDING A FUEL CELL AND AN ENERGY STORAGE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256811**

(43) Date de publication de la demande:
**20.05.2015 Bulletin 2015/21**

(73) Titulaires:
- **Commissariat à l'Energie Atomique et aux Energies Alternatives**
  **75015 Paris (FR)**
- **Institut National Des Sciences Appliquées De Lyon**
  **69621 Villeurbanne (FR)**
- **CENTRE NATIONAL DE LA RECHERCHE SCIENTIFIQUE -CNRS-**
  **75016 Paris (FR)**
- **Université Lyon 1 Claude Bernard**
  **69100 Villeurbanne (FR)**
- **Ecole Centrale De Lyon**
  **69134 Ecully Cedex (FR)**
- **Institut Francais Des Sciences Et Technologies Des Transports De L'Amenagement Et Des Reseaux (IFSTTAR)**
  **77420 Champs Sur Marne (FR)**

(72) Inventeurs:
- **GERARD, Mathias**
  **F-38100 Grenoble (FR)**
- **BIDEAUX, Eric**
  **F-01600 Trevoux (FR)**
- **DA FONSECA, Ramon**
  **F-69100 Villeurbanne (FR)**
- **DESBOIS-RENAUDIN, Matthieu**
  **F-38250 Villard de Lans (FR)**
- **JEANNERET, Bruno**
  **F-69001 Lyon (FR)**

(74) Mandataire: **GIE Innovation Competence Group**
**310, avenue Berthelot**
**69372 Lyon Cedex 08 (FR)**

(56) Documents cités:
**WO-A1-2006/120822** **US-A1- 2010 316 921**

- **TRITSCHLER P J ET AL: "Energy management strategies for an embedded fuel cell system on agricultural vehicles", ELECTRICAL MACHINES (ICEM), 2010 XIX INTERNATIONAL CONFERENCE ON, IEEE, PISCATAWAY, NJ, USA, 6 septembre 2010 (2010-09-06), pages 1-6, XP031779811, ISBN: 978-1-4244-4174-7**

EP 2 872 356 B1

## Description

L'invention concerne les motorisations de véhicules hybrides, et en particulier la commande de motorisations hybrides incluant un moteur électrique alimenté soit par une batterie d'accumulateurs soit par une pile à combustible.

La demande croissante pour réduire les émissions nocives de gaz pour des applications de transport induit d'importantes recherches. Le développement de véhicules plus performants en termes de consommation d'énergie fait partie des principaux objectifs. Les solutions de motorisation hybrides incluant un moteur électrique connaissent un important développement. L'hybridation offre notamment les avantages suivants:

- la récupération de l'énergie au cours du freinage. Une partie de la puissance mécanique inertielle du véhicule est récupérée par le moteur électrique fonctionnant en génératrice et stockée dans la batterie ;
- avoir un degré de liberté supplémentaire dans la gestion de la consommation d'énergie du véhicule. Les points de fonctionnement des différentes sources du véhicule peuvent ainsi être utilisés avec leurs rendements optimaux au cours de l'utilisation.

En particulier, dans un véhicule électrique à pile à combustible (PAC) à hydrogène, l'hybridation avec un système de stockage d'énergie électrique (SSE) tel qu'une batterie d'accumulateurs électrochimiques, ouvre la possibilité de limiter la dynamique de la pile à combustible. Le SSE fournit la puissance dynamique élevée exigée par le véhicule alors que le système PAC peut fournir la puissance adaptée à sa propre dynamique (proche de la puissance moyenne du véhicule) plus réduite. Alors que la batterie d'accumulateurs électrochimiques est un système de conversion d'énergie réversible, la PAC est un système de conversion d'énergie non réversible.

Un contrôle de la répartition de la fourniture de puissance entre la PAC et le SSE est nécessaire pour optimiser la consommation d'énergie. Un système de gestion de la répartition de puissance est généralement désigné par le terme SGE.

Un SGE peut soit mettre en oeuvre une optimisation hors ligne (lois de commandes simulées au préalable) soit une optimisation en ligne (adaptation des lois de commande aux conditions de fonctionnement rencontrées par le véhicule).

Le document rédigé par MM Vinot, Trigui et Jeanneret et intitulé 'optimal management of electric vehicles with hybrid system', publié dans le cadre de la conférence IEEE 'Vehicle power and propulsion conférence' tenue à Lille en Juin 2010, décrit un procédé de commande du SGE dans le cadre d'un véhicule combinant des batteries et des super capacités pour l'alimentation du moteur électrique. La méthode proposée dans ce document permet de minimiser la consommation énergétique globale par son calcul d'optimisation. Cependant, la minimisation de la consommation énergétique n'est vraiment effective qu'en connaissant a priori le cycle de roulage du véhicule. Une telle méthode présente donc un intérêt pratique relativement réduit dans les applications réelles où le cycle de roulage est souvent non défini à l'avance.

Le document rédigé par MM Thritschler, Bacha, Rullière et Husson et intitulé 'Energy management strategies for an embedded fuel cell system on agricultural vehicles', publié dans le cadre de la 19$^{ème}$ conférence ICEM tenue à Rome en Juin 2010, décrit l'utilisation pratique du principe du maximum de Pontryagin adapté pour l'application en ligne dans un véhicule lourd à pile à combustible. Cette méthode de commande en temps réel du SGE ne nécessite pas une connaissance a priori du cycle de conduite du véhicule. L'état de charge du système de stockage d'énergie électrique est maintenu en utilisant la recharge par la PAC (conversion de l'hydrogène). L'optimisation énergétique est basée sur la minimisation de la consommation de carburant, soumise à des contraintes comme le maintien du niveau de l'état de charge dans le SSE.

Du fait d'une application à des véhicules agricoles lourds dans lesquels la récupération d'énergie au freinage s'avère quasiment inexistante, cette méthode ne gère pas le freinage récupératif. Par conséquent, le rendement du système est non optimal pour une application automobile classique, qui alterne de fréquents cycles de freinage et d'accélération. Par ailleurs, cette méthode est relativement mal optimisée pour gérer la différence de dynamique de la pile à combustible et des batteries d'accumulateurs.

Le document US2010/316921 décrit une motorisation de véhicule comportant un système de stockage d'énergie électrique réversible et une commande non-linéaire plate avec une consigne de puissance à délivrer par une pile à combustible comme entrée de commande. La commande mémorise un modèle de consommation en fonction de la puissance délivrée par la pile à combustible. Ce document ne permet pas de régler la puissance à générer par la pile en fonction des contraintes de fonctionnement du véhicule pour minimiser la consommation de dihydrogène.

L'invention vise à résoudre un ou plusieurs de ces inconvénients, en nécessitant si possible une puissance de calcul réduite pour la réalisation d'une optimisation en ligne, et en réalisant une optimisation satisfaisante même pour des cycles de conduite non prédéfinis. L'invention porte ainsi sur une motorisation de véhicule automobile, comprenant :

- une pile à combustible comportant une commande non-linéaire plate dont l'entrée de commande Ppac* est une consigne de la puissance électrique à délivrer par la pile à combustible;

- un système de stockage d'énergie électrique réversible;
- un moteur électrique configuré pour entraîner les roues d'un véhicule ;
- un élément de connexion électrique configuré pour connecter sélectivement la pile à combustible et/ou le système de stockage d'énergie au moteur électrique ;
- un circuit de commande :

   - mémorisant un modèle de la consommation de dihydrogène de la pile à combustible en fonction de la puissance électrique délivrée par cette pile à combustible, sous forme de polynôme du second degré g(Ppac*)= a*Ppac*$^2$ + b*Ppac* + c, avec a, b et c des constantes ;
   - configuré pour calculer un coefficient de répartition de puissance λ1 entre la pile à combustible et le système de stockage d'énergie électrique

$$\lambda_1 = \frac{2a\left(\dfrac{\Delta SoE.\varepsilon_{max}}{\Delta t} - \sum_{j=t}^{t+T_h} P_{bus}(j)\right)}{\left(\dfrac{T_h}{\Delta t}\right)} + b$$

avec ΔSoE la différence entre une cible de quantité d'énergie dans le système de stockage et la quantité d'énergie actuelle du système de stockage exprimée en pourcentage, $\varepsilon_{max}$ la quantité d'énergie maximale pouvant être stockée dans le système de stockage d'énergie électrique, Pbus(j) des valeurs de mesure de puissance électrique échangée entre le moteur électrique et l'élément de connexion électrique, Δt un intervalle temporel séparant deux mesures successives de Pbus(j), Th la durée de fonctionnement du moteur électrique prise en compte pour le calcul de λ1;
   - configuré pour appliquer la consigne de puissance Ppac* sur la commande non-linéaire plate de la pile à combustible, avec Ppac*=(λ1-b)/(2a) ;
   - configuré pour commander l'élément de connexion électrique pour recharger le système de stockage d'énergie électrique lorsque la valeur de la consigne de puissance Ppac* est supérieure à la puissance appelée par le moteur électrique.

Selon une variante, le circuit de commande est configuré pour déterminer une amplitude de variation entre des valeurs Pbus et configuré pour baisser la valeur de Th lors d'une augmentation de l'amplitude de variation et configuré pour augmenter la valeur de Th lors d'une diminution de l'amplitude de variation.

Selon une autre variante, ladite durée Th est comprise entre 20 et 600 secondes.

Selon une autre variante, ledit intervalle Δt est compris entre 1 seconde et 20 secondes.

Selon encore une autre variante, le rapport Th/Δt est au moins égal à 5.

Selon une variante, le circuit de commande est configuré pour calculer la valeur ΔSoE avec une fréquence inférieure à la fréquence des mesures de puissance Pbus.

Selon une autre variante, la cible de quantité d'énergie est comprise entre 40 et 80% de la quantité d'énergie maximale du système de stockage d'énergie électrique.

Selon une autre variante, le système de stockage d'énergie électrique inclut une batterie d'accumulateurs électrochimiques.

Selon encore une autre variante, la pile à combustible comprend :

- un réacteur ;
- une pompe, ladite pompe étant configurée pour comprimer de l'air à la cathode du réacteur, ladite pompe incluant un moteur électrique et un rotor de compression entraîné en rotation par le moteur électrique de la pompe ;
- une vanne de régulation du débit d'air à travers le réacteur ;
- la commande non linéaire plate de la pile à combustible étant configurée pour convertir la consigne de puissance Ppac* respectivement en une tension de consigne du moteur électrique de la pompe et en une tension de consigne de la vanne.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'une partie physique et d'une partie logique d'un véhicule mettant en oeuvre l'invention ;
- la figure 2 est une représentation schématique d'une pile à combustible accouplée à d'autres composants du véhicule ;
- la figure 3 fait ressortir les éléments de la figure 1 présentant une dynamique rapide ;
- les figures 4 à 6 sont des diagrammes des états d'énergie pour différents profils de roulage, avec différentes durées d'horizon de prédiction.

L'optimisation de la consommation selon l'invention est basée sur une théorie d'optimisation exacte qui permet d'assurer un comportement stable de l'algorithme en tenant compte de différentes dynamiques du système. La solution proposée n'est pas confrontée à une limitation d'implémentation, car elle se contente de ressources de calcul et de mémoire relativement réduites. Cette solution s'adapte donc bien à une application en ligne embarquée.

L'invention permet en outre d'intégrer les contraintes de fonctionnement du système dans le calcul d'optimisation, sans dégrader excessivement le rendement énergétique du système.

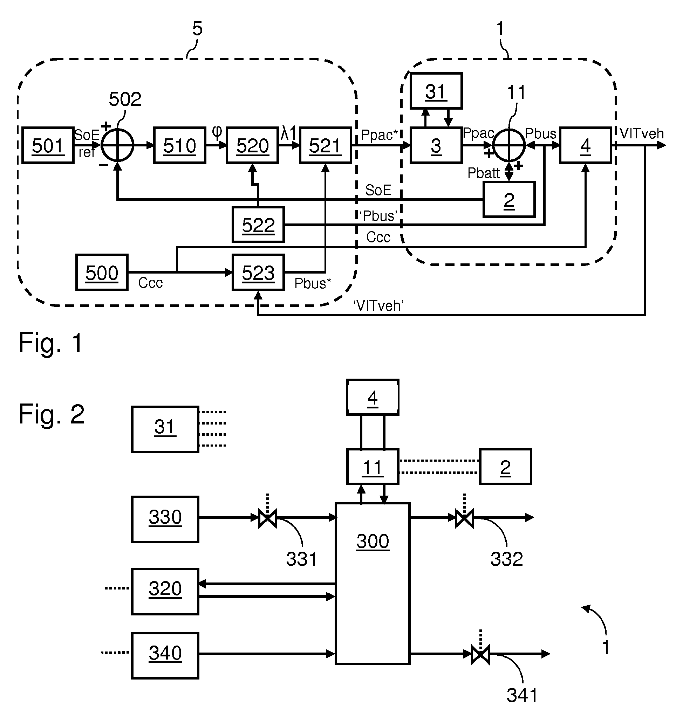

Un exemple de véhicule hybride destiné à mettre en oeuvre l'invention est illustré schématiquement à la figure 1. Le véhicule comprend d'une part une partie physique 1 et d'autre part une partie logique 5.

La partie physique 1 comporte une charge électrique 4 du véhicule et ses éléments énergétiques (une PAC 3 et un système de stockage d'énergie électrique 2, par exemple une batterie d'accumulateurs électrochimiques). La charge électrique 4 est illustrée schématiquement et inclut typiquement un moteur électrique d'entraînement des roues du véhicule, et éventuellement des périphériques électriques (climatisation, chauffage etc...). Par la suite, la charge électrique 4 sera assimilée à la chaîne de traction électrique du véhicule, incluant le moteur électrique, des périphériques électriques, un réducteur de vitesse et les roues du véhicule.

Soit Pbus la puissance électrique transitant par la connexion de puissance de la charge électrique 4, Ppac la puissance électrique fournie par la PAC 3 et Pbatt la puissance électrique fournie ou reçue par le système de stockage 2. Pbus vérifie alors la relation suivante :

stockage 2. Pbus vérifie alors la relation suivante

$$Pbus = Ppac + Pbatt$$

Lorsque le moteur électrique de la charge 4 est en mode moteur, Pbus correspond à la puissance électrique fournie à ce moteur. Lorsque le moteur électrique de la charge 4 est en mode génératrice (durant un freinage régénératif), Pbus correspond à la puissance électrique fournie par le moteur à la batterie 2.

Comme mentionné auparavant, le système de stockage d'énergie électrique de cet exemple est une batterie 2 d'accumulateurs électrochimiques. La batterie 2 est utilisée :

- comme complément ou remplacement de l'alimentation électrique de la charge 4 durant certaines phases de fonctionnement ;
- comme dispositif de stockage de l'énergie fournie par la charge 4 lors d'une récupération d'énergie au freinage ou lors de la génération d'une puissance électrique excédentaire par la pile à combustible 3.

La batterie 2 forme ainsi un système de stockage d'énergie électrique réversible.

La connexion de puissance de la charge électrique 4 est typiquement réalisée sous la forme d'un bus de puissance continue. Une connexion électrique 11 permet d'accoupler la puissance de la PAC 3 et la puissance de la batterie 2 pour alimenter la charge électrique 4. La connexion électrique 11 peut en outre accoupler la batterie 2 au moteur de la charge électrique 4 en mode génératrice, pour recharger cette batterie 2. La connexion électrique 11 peut par ailleurs accoupler la PAC 3 à la batterie 2 afin de recharger celle-ci. La connexion électrique 11 peut inclure de façon connue en soi des convertisseurs pour abaisser/élever les tensions respectives fournies par la PAC 3 ou le système de stockage d'énergie électrique 2.

La batterie 2 comporte un contrôleur (non illustré) généralement désigné par le terme BMS (pour Battery Management System en langue anglaise). Le BMS est avantageusement apte à fournir un état de charge (généralement désigné par le terme SOC) ou un état d'énergie (généralement désigné par le terme SOE) de la batterie 2. Le SOC est généralement exprimé sous forme de pourcentage de charge par rapport à la capacité de charge maximale de la batterie 2. Le SOE est généralement exprimé sous forme de pourcentage d'énergie par rapport à la capacité énergétique maximale de la batterie 2. De nombreuses méthodes de calcul différentes du SOE ou du SOC sont connues en soi de l'homme du métier. De tels calculs peuvent notamment utiliser des paramètres comme la puissance électrique délivrée ou absorbée et/ou la température de fonctionnement. Dans la suite, l'exemple de mise en oeuvre de l'invention sera basé sur un état d'énergie. La relation suivante donne un exemple simple de détermination de l'état d'énergie SOE :

exemple simple de détermination de l'état d'énergie SOE

$$SOE\,(\%)=100*(\varepsilon/\varepsilon max)$$

Avec $\varepsilon max$ la quantité d'énergie maximale pouvant être stockée dans la batterie 2 et avec :

$$\varepsilon = -\int_{0}^{T} Pbatt\,.dt$$

La pile à combustible ou PAC 3 comporte un contrôleur 31 dédié à son fonctionnement, comme cela sera détaillé par la suite. Le fonctionnement de la PAC 3 permet de convertir l'énergie chimique contenue sous forme de dihydrogène en énergie électrique par une réaction électrochimique d'oxydoréduction. Les produits résultant de la réaction sont de l'énergie électrique, de la chaleur et de l'eau. La PAC 3 peut être mise en oeuvre sous la forme d'un système tel qu'illustré schématiquement à la figure 2. Un tel système permet de distribuer et de conditionner les gaz réactifs (dihydrogène et dioxygène), de refroidir la pile, et de récupérer l'énergie électrique produite.

La PAC 3 comprend généralement un ensemble de cellules connectées électriquement en série et formant un réacteur 300. La tension aux bornes de chaque cellule de la PAC 3 est fonction de différentes variables, telles que la pression à la cathode, la pression à l'anode, la stoechiométrie de l'oxygène, l'humidité relative, la température de la cellule et le courant électrique débité par la PAC 3.

La PAC 3 comporte un réservoir de dihydrogène 330. Des vannes 331 et 332 contrôlent la quantité de dihydrogène s'écoulant vers le réacteur 300 et à partir du réacteur vers l'ambiant. Un circuit de refroidissement 320 gère l'écoulement d'un fluide caloporteur dans le réacteur 300, afin de maintenir une température de fonctionnement optimale dans celui-ci. La PAC 3 comprend en outre un compresseur 340. Une vanne 341 contrôle la pression établie dans la chambre de la cathode de la PAC au réacteur 300.

Le contrôleur 31 commande par ailleurs différents composants de la PAC 3. Le contrôleur 31 commande notamment les vannes 331 et 332 pour définir la quantité de dihydrogène s'écoulant vers le réacteur 300 et à partir du réacteur 300. Le contrôleur 31 commande en outre la vanne 341 pour définir la quantité d'air s'écoulant à partir du réacteur 300 pour le contrôle de la pression dans la chambre cathodique du réacteur 300. Le contrôleur 31 commande le compresseur 340 pour définir la quantité d'air s'écoulant vers le réacteur 300. Le contrôleur 31 commande le circuit de refroidissement 320, en vue de réguler la température de fonctionnement du réacteur. Le contrôleur 31 est configuré pour définir des paramètres de fonctionnement de la PAC 3 pour optimiser ses performances pour un point de fonctionnement souhaité. Le contrôleur 31 comporte ainsi des lois de commande respectives pour les vannes 331, 332, 341, le compresseur 340 et le circuit de refroidissement 320.

La partie logique 5 est typiquement mise en oeuvre sous la forme d'un calculateur, exécutant par exemple un ou plusieurs programmes embarqués d'optimisation du fonctionnement de la partie physique 1.

La partie logique 5 comporte une interface de commande 500, par exemple une pédale d'accélérateur. Par l'intermédiaire de l'interface de commande 500, le conducteur applique une consigne de couple Ccc. Cette consigne de couple Ccc est appliquée sur le moteur de la charge électrique 4. La variable de sortie du véhicule est la vitesse du véhicule VITveh.

La partie logique 5 comprend une fonction d'optimisation 521. La fonction d'optimisation est destinée à générer une consigne de puissance Ppac* à destination de la PAC 3. La puissance Pbat est adaptée en fonction de la consigne de couple Ccc et de la consigne Ppac*. Cette consigne de puissance Ppac* correspond à la valeur de puissance optimale que la PAC 3 doit fournir sur la connexion électrique 11. La fonction d'optimisation 521 est destinée non seulement à trouver la consigne de puissance Ppac* qui minimise la consommation globale d'hydrogène pour un cycle de roulage, mais aussi destinée à prendre en compte des limitations et restrictions du système, telles que les points de fonctionnement en puissance respectifs de la PAC 3 et de la batterie 2, la dynamique de réponse des différents composants et les limites des variables d'état de la partie physique 1.

La partie logique 5 comprend en outre :

- une fonction 501 de définition d'une valeur de référence SoEref du niveau d'énergie du système de stockage d'énergie électrique 2 ;
- un comparateur 502 ;
- une fonction de robustesse 510 ;
- une fonction de prévision 522 ;
- une fonction de correction de prévision 520 ;
- une fonction d'estimation 523.

L'interface 500 fournit la valeur de consigne Ccc à la fonction d'estimation 523. La fonction 523 reçoit la valeur de vitesse du véhicule 'VITveh'. La fonction 523 fournit la valeur Pbus* à la fonction d'optimisation 521.

Le comparateur 502 fournit à la fonction de robustesse 510, ΔSoE, soit la différence entre la valeur SoEref (fournie par la fonction 501) et la valeur d'état d'énergie SoE mesurée (fournie par le système de stockage d'énergie électrique).

La fonction de robustesse 510 fournit un paramètre φ à la fonction 520.

La fonction de prévision 522 reçoit la valeur de puissance 'Pbus', représentative de la puissance électrique Pbus. La fonction de prévision 522 fournit à la fonction de correction 520 la distribution de puissance Pbus prévue, en se basant sur des données acquises dans le passé.

La fonction de correction 520 fournit un paramètre λ1 à la fonction d'optimisation 521.

La dynamique de la PAC 3 dépend principalement de la dynamique de son circuit d'air. Les consignes de pilotage générées par la partie logique 5 pour la PAC 3 visent à synthétiser la commande du circuit d'air de la PAC 3. Une commande non linéaire plate est utilisée dans le contrôleur 31, selon le principe exposé ci-dessous.

Le circuit d'air inclut généralement, de façon séquentielle, de l'entrée jusqu'à la sortie: un filtre à air, le compresseur 340, un évaporateur-condenseur, le volume de cathode, un séparateur air/eau liquide, et la vanne 341 qui contrôle la pression à la cathode du réacteur. Le compresseur 340 est généralement un compresseur rotatif.

Dans la modélisation du circuit d'air, on réalise une approximation en prenant en compte les composants ayant les dynamiques prépondérantes: le compresseur d'air, le volume d'air entre la sortie du compresseur et la sortie de la cathode, et la vanne 341. On prend comme hypothèse simplificatrice que la pression entre la sortie du compresseur 340 et la sortie de la cathode est homogène.

Les deux variables les plus importantes pour le fonctionnement de la PAC 3 sont la pression cathodique (pression partielle d'oxygène) et le débit d'air (flux d'oxygène). Ces variables sont contrôlées dynamiquement par la vanne 341 et par le compresseur 340. Concernant le moteur rotatif du compresseur, la partie mécanique possède la dynamique la plus lente du compresseur 340. La dynamique de la partie électrique est négligée dans un souci de simplification. Une relation linéaire entre la partie électrique et la partie mécanique du circuit d'air est fournie par la relation suivante :

$$[1] \qquad \frac{d\omega}{dt} = \frac{1}{Jmot}(\alpha * umot - Cr - \Phi \cdot \omega)$$

Où ω est la vitesse de rotation du moteur du compresseur, α est le coefficient de transformation de tension / courant du compresseur, umot est la tension appliquée au moteur, Jmot est l'inertie du moteur, Cr est le couple résistant imposé par la phase de compression et Φ est le coefficient de frottement du rotor du moteur.

L'étape de compression peut-être représentée par le système d'équations statiques suivant :

$$[2] \qquad \begin{cases} \prod = \dfrac{p_{cath}}{p_{atm}} \\[2em] q_{air} = \omega \dfrac{p_{cath}}{RTemp_{atm}} \dfrac{cyl}{2\pi} \eta_v\left(\prod, \omega\right) \\[2em] C_r = \dfrac{p_{cath}}{R} \dfrac{cyl}{2\pi} C_{p_{air}} \dfrac{cyl}{\eta_{is}} \eta_v\left(\prod, \omega\right)\left(\prod^{\frac{\gamma-1}{\gamma}} - 1\right) \end{cases}$$

Où $q_{air}$ est le débit d'air de sortie, Pcath est la pression imposée par la cathode, Patm est la pression atmosphérique, Tempatm est la température de l'air d'entrée (température atmosphérique), cyl est la capacité du compresseur, R est la constante des gaz, ηis est le rendement isentropique, ηv est le rendement volumétrique, γ est le rapport de la chaleur spécifique et Cpair est la chaleur spécifique de l'air. Le rendement isentropique et le rendement volumétrique sont des paramètres fonction du taux de compression et de la vitesse de rotation du moteur électrique du compresseur 340.

Le dernier élément dans le circuit est la capacité volumique de la cathode. Son état de pression peut être représenté par l'équation différentielle des gaz parfaits selon la relation suivante :

$$[3] \quad \frac{dp_{cath}}{dt} = \frac{\left(q_{air} + q_{H_2O} - q_{O_2} - q_{vanne}\right)RTemp_{cath}}{V}$$

Avec le système d'équations suivant :

$$[4] \quad \begin{cases} q_{H_2O} = \dfrac{N_{cell}I_{pac}}{2F}; \quad q_{O_2} = \dfrac{N_{cell}I_{pac}}{4F} \\[2em] q_{vanne} = \dfrac{C_d C_m u_{vanne} p_{cath}}{\sqrt{Temp_{cath}}} \\[2em] C_m = \sqrt{\left[\dfrac{2\gamma}{R(\gamma-1)}\left\{\left(\dfrac{p_{atm}}{p_{cath}}\right)^{\frac{2}{\gamma}}\left(\dfrac{p_{atm}}{p_{cath}}\right)^{\frac{(\gamma+1)}{\gamma}}\right\}\right]} \end{cases}$$

Où V est le volume de la cathode, qair est le débit d'air du compresseur, qH2O est le débit d'eau produit par la réaction électrochimique du réacteur 300, qO2 est le débit d'oxygène consommé par le réacteur 300, qvanne est le débit d'air de sortie de la cathode, Tempcath est la température des gaz à la cathode, Ncell est le nombre de cellules électrochimiques du réacteur 300, F est la constante de Faraday, Ipac est le courant généré par la PAC 3, uvanne est la variable d'entrée pour contrôler le débit sortant de la vanne, et Cd est un coefficient de décharge. La température Tempcath est considérée constante par simplification.

Le modèle de circuit d'air dans le système d'équation [5] suivant est défini par les relations [1] et [3] en utilisant les systèmes d'équation [2] et [4].

$$[5] \quad \begin{cases} \dfrac{d\omega}{dt} = \dfrac{k}{J_{mot}}.u_{mot} - \dfrac{p_{cath}}{J_{mot}R}\dfrac{cyl^2\eta_v C_{P_{air}}}{2\pi\eta_{is}}\left(\left(\dfrac{p_{cath}}{p_{atm}}\right)^{\frac{\gamma-1}{\gamma}} - 1\right) - \dfrac{\Phi}{J_{mot}}\omega \\[2em] \dfrac{dp_{cath}}{dt} = \dfrac{RTemp_{cath}}{V}\left(\omega\dfrac{p_{cath}}{RT_{atm}}\dfrac{cyl}{2\pi}\eta_v + q_{H_2O} - q_{O_2} - \dfrac{C_d C_m u_{vanne} p_{cath}}{\sqrt{Temp_{cath}}}\right) \end{cases}$$

Le modèle du circuit d'air est ainsi défini par deux équations non linéaires donnant la relation entre les deux variables d'état ω et Pcath et deux entrées umot et uvanne. Le comportement de ces deux variables d'état est prépondérant afin d'assurer un bon fonctionnement de la PAC 3. En pratique, la pression cathodique Pcath et la stoechiométrie oxygène StO2 (définie par le rapport du débit d'oxygène délivré sur le débit d'oxygène requis) conservent des valeurs relativement constantes malgré les variations de demande de courant sur la PAC 3.

On va dorénavant décrire la synthèse d'une loi de commande non linéaire dite plate du circuit d'air. Pour répondre à la dynamique non linéaire du circuit d'air (système d'équations [5]), une loi de commande non linéaire basée sur la linéarisation par l'application d'une théorie de la platitude est appliquée (cette théorie est notamment décrite dans la publication de MM Fliess, Lévine, Martin et Rouchon, 'Flatness and defect of nonlinear systems : Introductory theory and examples', International Journal of Control, vol. 61, p. 1327 :1361, 1995). Afin de faciliter la conception de la loi de commande, on utilise les hypothèses suivantes : les rendements du compresseur, les conditions de l'air ambiant et la température de la cathode sont constants.

Cette approche exige que les deux sorties de commande y1 et y2 soient choisies telles que les états et les entrées des systèmes soient exprimés en fonction des sorties y1 et y2 et de leurs dérivées successives. La somme du plus haut degré de dérivation de chaque sortie doit avoir la même valeur que l'indice caractéristique du système p. Pour chaque sortie yi, il existe un indice caractéristique pi, la somme de tous les pi donnant la valeur de l'indice caractéristique du système.

Les deux variables importantes à contrôler sont pcath et $q_{air}$. La première est une variable d'état tandis que la seconde dépend des deux variables d'état. Donc en choisissant les variables d'états comme des sorties ($y1 = \omega$ et $y2$ = pcath), le système d'équations suivant [6] représente le nouveau système (les paramètres k1 à k6 sont des constantes utilisées pour simplifier la présentation) :

$$[6] \quad \begin{cases} \dot{y}_1 = k_1.u_{mot} - k_2 y_2 \left( \left( \frac{y_2}{10^5} \right)^{\frac{\gamma-1}{\gamma}} - 1 \right) - k_3 y_1 \\ \\ \dot{y}_2 = k_4 k_5 y_1 y_2 + k_4 q_{H_2O} - k_4 q_{O_2} - k_4 k_6 u_{vanne} y_2 \end{cases}$$

Dans ce système, les états et les entrées ne dépendent que des sorties y1 et y2 et de leurs dérivées, ce qui signifie que le système ne possède pas de dynamique résiduelle (linéarisation complète) et que tous les états sont observables et contrôlables. Les commandes des variables umot et uvanne sont présentées dans les relations [7] et [8].

$$[7] \quad u_{mot} = \frac{\dot{y}_1^d + k_3 y_1^d + k_2 y_2^d \left[ \left( \frac{y_2^d}{10^5} \right)^{\frac{\gamma-1}{\gamma}} - 1 \right]}{k_1}$$

$$[8] \quad u_{vanne} = \frac{-\dot{y}_2^d + k_4 k_5 y_1^d y_2^d - k_4 q_{O_2} + k_4 q_{H_2O}}{k_4 k_6 y_2^d}$$

Dans ces deux relations, les termes $y_n^d$ représentent la trajectoire désirée de la variable. L'application de la commande sur le système d'équations dynamique [6], en utilisant de nouvelles variables de commandes W1 et W2 en remplacement de $d(y_1^d)/dt$, $d(y_2^d)/dt$ permet d'avoir un système linéaire avec un comportement intégrateur (avec W1 = $d(y_1^d)/dt$ et W2 = $d(y_2^d)/dt$).

Les nouvelles commandes W1 et W2 sont les entrées de Brunovizky du système, défini comme :

$$[9] \quad \begin{aligned} W1 &= \sigma \, (y_1^d - \omega) \\ W2 &= \psi \, (y_2^d - pcath) \end{aligned}$$

Avec $\sigma$ et $\psi$ des valeurs de gains configurées pour assurer la stabilité et la performance (gains avec valeurs négatives). Les trajectoires de référence des sorties ($y_1^d$ et $y_2^d$) sont choisies en fonction du comportement désiré des variables d'état pcath (comportement stable et continu souhaité) et $\omega$ (devant être choisi en temps réel pour que le débit du compresseur assure une stoechiométrie d'oxygène constante avec la valeur désirée).

Une telle loi de commande pour le système PAC 3 permet de contrôler les variables dynamiques non linéaires du circuit d'air pour optimiser son fonctionnement. Du point de vue de l'optimisation énergétique du fonctionnement du véhicule, le système [9] fournit une simplification de la modélisation de la dynamique du système qui permet d'obtenir une solution analytique aux lois d'optimisation.

La problématique de l'optimisation de la consommation de carburant par la PAC 3 revient à déterminer une séquence de commandes Ppac* générée par la fonction d'optimisation 521 permettant d'obtenir un minimum d'une fonction de coût J(Ppac), tout en respectant les contraintes et conditions limites du système. Le critère de minimisation peut donc s'exprimer comme suit :

$$[10] \qquad J(Ppac*) = \min_{Ppac*} \int_{0}^{T} g(Ppac(t)).dt$$

$$Ppac* = \mathrm{argmin}\ (J(Pac(t)))$$

Sur la base de relations exprimées précédemment, la dynamique du système associant le système de stockage d'énergie électrique 2 et la PAC 3 est définie par le système d'équations suivant :

$$[11] \qquad d\varepsilon/dt = -Pbatt$$
$$d\omega/dt = W1$$
$$dpcath/dt = W2$$

Dans la partie logique 5, on modélise la consommation d'hydrogène de la PAC 3 par une fonction g polynomiale de degré 2, fonction de la puissance Ppac :

$$[12] \qquad g(Ppac\ (t)) = a*Ppac^2 + b*Ppac + c$$

La fonction peut notamment fournir la consommation d'hydrogène en g/s par une approximation quadratique de la puissance délivrée par la PAC 3 lors de tests. Cette fonction g prend avantageusement en compte que la PAC 3 consomme de l'hydrogène même sans fournir de puissance électrique. Cela est justifié par le fait que cette fonction g représente un modèle de consommation équivalente d'hydrogène. Ce modèle de consommation prend en compte la consommation des composants auxiliaires de la PAC 3 même lorsqu'elle ne délivre aucune puissance électrique.
Les paramètres a, b et c sont constants et liés au dimensionnement du système PAC 3. Ces paramètres peuvent être calculés à partir de la réponse du système PAC 3 réel sujet à un profil d'appel de puissance électrique, par l'application d'une méthode d'identification paramétrique comme la méthode des moindres carrés.
Pour une PAC 3 de 30 kW, un exemple de valeur des paramètres peut être :

$a = 4{,}9\ 10^5$; $b = 4{,}83$; $c = 4360$

Cette fonction de modélisation peut être obtenue à partir de l'approximation de la réponse en consommation du modèle complet, en partant de l'hypothèse que le système PAC 3 fonctionne avec des conditions de fonctionnement contrôlées (pressions à l'anode et à la cathode, stoechiométrie d'oxygène, température, hygrométrie, etc.). Cette approximation permet une résolution du problème d'optimisation explicite (tout à fait adaptée pour des applications embarquées présentant des capacités de calcul limitées), simplifiant la loi de commande.
En fonction de la consigne Ccc et de la vitesse du véhicule VITveh, la fonction d'estimation 523 estime la puissance électrique Pbus* à fournir à la charge électrique 4. La fonction 523 met en oeuvre à cet effet une inversion du modèle de la chaîne de traction du véhicule.
Dans la fonction d'optimisation 521, la valeur de puissance Pbus* est comme une variable du problème d'optimisation mais surtout comme un paramètre qui varie dans le temps.
Afin de résoudre le problème d'optimisation avec une seule commande (Pbatt*), on effectue un changement de variables dans la fonction de coût J(Ppac), en remplaçant la variable Ppac par son expression en fonction de Pbatt et de l'estimation de la puissance appelée par le véhicule. On obtient ainsi la relation suivante à partir de la fonction de modélisation :

$$[13] \qquad J(Pbatt*) = \min_{Pbatt} \int_{0}^{T} (a*Pbatt(t)^2 + \beta*Pbatt(t) + \gamma).dt$$

Avec β = -(2a (Pbus*(t) + b) et γ= (a (Pbus*(t))$^2$ + b (Pbus (t)) + c) la fonction de consommation peut être modélisée comme suit :

$$[14] \quad g(Pbatt)= a*Pbatt(t)^2 + \beta*Pbatt(t) + \gamma$$

Les contraintes appliquées dans la fonction 521 sont les limitations de fonctionnement de chaque composant, tandis que les conditions limites sont les conditions des variables d'état du système à la fin du cycle de roulage. Par exemple, l'état d'énergie de la batterie d'2 à la fin du cycle de roulage doit être égal à sa valeur de référence. Dans un mode de fonctionnement hybride intégral (la PAC 3 et la batterie 2 sont utilisées sur l'ensemble de l'autonomie de roulage), l'état d'énergie à la fin du cycle du roulage doit être égal à l'état d'énergie au début du cycle de roulage.

Les paramètres suivants seront utilisés dans les relations :

(0..T) : l'intervalle temporel du cycle de roulage ;
SoE(t) : l'état d'énergie instantané de la batterie 2 ;
Pcath : la pression à la cathode des cellules de la PAC 3 ;
StO2 : stoechiométrie du dioxygène

Les contraintes prises en compte sont par exemple :

$$Pbatt_{min} \leq Pbatt \leq Pbatt_{max}$$

$$Ppac_{min} \leq Ppac \leq Ppac_{max}$$

$$SoE_{min} \text{ (par exemple 40\%)} \leq SoE \leq SoE_{max} \text{ (par exemple 80\%)}$$

Les conditions aux limites sont par exemple :

SoE(T)= SoEref
Pcath(0..T)=1,2 bar
StO2(0..T)=1,5

La fonction d'optimisation 521 peut mettre en oeuvre le principe du maximum de Pontryaguine (décrit par M Scordia dans le document 'Approche systématique de l'optimisation du dimensionnement et de l'élaboration des lois de gestion d'énergie de véhicules hybrides' PhD thesis, Université Henry Poincaré - Nancy 1, 2004). Le problème d'optimisation peut être écrit sous forme plus compacte et symétrique avec la fonction Hamilton suivante :

$$H\left(\varepsilon, \omega, p_{cath}, P_{batt}, W_1, W_2, \lambda_1, \lambda_2, \lambda_3\right) =$$

$$[15] \quad g\left(P_{batt}\right) + \lambda_1 f_1\left(P_{batt}\right) + \lambda_2 f_2\left(W_1\right) + \lambda_3 f_3\left(W_2\right) =$$

$$g\left(P_{batt}\right) - \lambda_1 P_{batt} + \lambda_2 W_1 + \lambda_3 W_2$$

Avec λ1, λ2, λ3 les co-états. Les conditions sur les états, les co-états et les commandes pour résoudre les problèmes d'optimisation sont :

$$[16] \quad \begin{cases} \dot{\varepsilon} = \dfrac{\partial H}{\partial \lambda_1}; \dot{\omega} = \dfrac{\partial H}{\partial \lambda_2}; \dot{p}_{cath} = \dfrac{\partial H}{\partial \lambda_3} \\[2em] -\dot{\lambda}_1 = \dfrac{\partial H}{\partial \varepsilon}; -\dot{\lambda}_2 = \dfrac{\partial H}{\partial \omega}; -\dot{\lambda}_3 = \dfrac{\partial H}{\partial p_{cath}} \\[2em] \dfrac{\partial H}{\partial P_{batt}} = 0; \dfrac{\partial H}{\partial W_1} = 0; \dfrac{\partial H}{\partial W_2} = 0 \end{cases}$$

Ces conditions permettent de trouver les trajectoires optimales des commandes et des co-états. Grâce à la commande non linéaire plate appliquée à la dynamique du système PAC 3 dans le contrôleur 31, on peut minimiser la fonction Hamilton de façon explicite. Les conditions sur les dérivées des co-états λn montrent qu'ils sont constants (dλn/dt = 0), alors que les conditions sur les dérivées de l'hamiltonien par rapport aux commandes sont les suivantes :

$$[17] \quad \frac{\partial H}{\partial P_{batt}} = 0 = 2aP^*_{batt}(t) + \beta(t) - \lambda_1 \Rightarrow$$

$$\Rightarrow P^*_{batt}(t) = \frac{\lambda_1 - \beta(t)}{2a}$$

$$\frac{\partial H}{\partial W_1} = 0 = \lambda_2$$

$$\frac{\partial H}{\partial W_2} = 0 = \lambda_3$$

Ces conditions montrent que le problème d'optimisation ne dépend que du co-état λ1 et des paramètres du système. Cela signifie que la loi de commande mise en oeuvre dans le contrôleur 31 pour le circuit d'air de la PAC 3 est suffisante pour assurer une réponse dynamique de la puissance Ppac (selon la consigne de puissance Ppac * donnée par la fonction l'optimisation 521) et permet d'éliminer les termes dynamiques de la PAC 3 du problème d'optimisation dans la fonction l'optimisation 521.

Dans les équations [17], la commande Pbatt* dépend du co-état λ1 (constante pendant le cycle de roulage). λ1 est représentatif du rapport de puissance entre la batterie 2 et la PAC 3. Afin de trouver la solution pour ce problème d'optimisation, la commande Pbatt est mise en oeuvre en choisissant λ1 tel que les contraintes et la condition limite (SoE (T) = SoEref) soient atteintes. La sortie de la fonction d'optimisation 521 est la consigne de puissance Ppac* que la PAC 3 doit fournir. La relation suivante permet de calculer la consigne Ppac* et doit être embarquée dans la partie logique 521.

$$[18] \quad Ppac^* = (\lambda1 - b)/(2a)$$

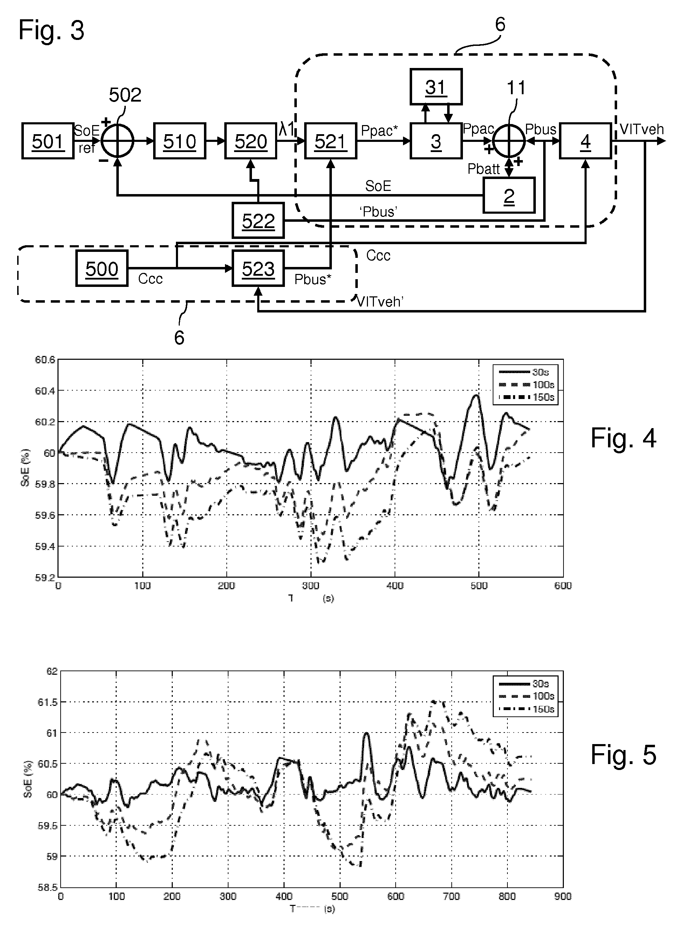

La fonction d'optimisation 521 calcule la consigne Ppac* avec une fréquence similaire à la dynamique du véhicule (fréquence comprise entre 2 et 100 Hz). Cette contrainte de fréquence de calcul met en évidence la nécessité de disposer d'un calcul simplifié de la puissance de consigne comme proposé. La relation [18] est algébrique et peut être résolue par des calculs directs, sans avoir besoin de mettre en oeuvre des algorithmes de recherche itérative de minimum. La figure 3 reprend la représentation schématique du véhicule en faisant ressortir dans la zone 6 les éléments ayant une dynamique rapide.

Même si dans ce bloc on trouve une formulation algébrique de Ppac*, le calcul du paramètre λ1 peut représenter un inconvénient pour une application embarquée en ligne. En effet, il faut éviter que le calcul de λ1 aboutisse à une dégradation de l'optimisation par une méconnaissance du cycle de roulage ou nécessite des optimisations hors ligne répétées.

La fonction de correction de prévisions 520 met en oeuvre le calcul du paramètre λ1 comme suit. Lorsque le cycle de conduite complet est inconnu a priori, afin d'optimiser la consommation, la fonction 520 fournit une valeur λ1 adaptée aux conditions de roulage en cours. La fonction 520 vise à calculer λ1 en utilisant un horizon fini de prédiction du cycle de roulage. La fonction 520 calcule λ1 de sorte que l'état d'énergie à la fin de l'horizon de prédiction soit égal à la valeur SoEref (condition limite du problème d'optimisation). La formulation mathématique de la valeur λ1 est basée sur la relation [18] et formulée comme suit :

$$[19] \quad P_{batt}^*(t) = (\lambda 1 - \beta(t))/(2a) \text{ dont on déduit } \lambda 1 = \beta(t) + 2a * P_{batt}^*(t)$$

L'approche proposée utilise un horizon fini de prédiction où la valeur λ1 est constante pour la résolution du problème d'optimisation. Pour un horizon fini d'une durée Th avec un pas de temps de calcul Δt, la même valeur de λ1 sera calculée un nombre Th / Δt de fois par la relation suivante :

$$[20] \quad \lambda_1 = \frac{\left(\sum_{j=t}^{t+T_h}(P_{batt}(j)).2a\right) + \sum_{j=t}^{t+T_h}\beta(j)}{\left(\dfrac{T_h}{\Delta t}\right)}$$

En remplaçant β(j) par β(j) = -(2a*Pbus(j)+b), on obtient la relation suivante :

$$[21] \quad \lambda_1 = \frac{2a\left(\left(\sum_{j=t}^{t+T_h}(P_{batt}(j))\right) - \sum_{j=t}^{t+T_h}P_{bus}(j)\right)}{\left(\dfrac{T_h}{\Delta t}\right)} + b$$

Dans cette formulation, λ1 possède une partie constante donnée par le paramètre b, qui peut être utilisée comme valeur de lambda par défaut dans le cas dégradé évoqué par la suite. La valeur de λ1 calculée par l'équation [21] a comme objectif de ramener la valeur d'état d'énergie SoE de la batterie 2 à sa valeur de référence SoEref à la fin de l'horizon Th. Par conséquent, on effectue un changement de variable pour que la variable SoE soit intégrée dans le calcul de λ1. Comme la valeur SoE est l'intégrale de la puissance de la batterie 2 dans le temps, on obtient la relation suivante :

$$[22] \quad \lambda_1 = \frac{2a\left(\dfrac{\Delta SoE_{desire'}.\varepsilon_{max}}{\Delta t} - \sum_{j=t}^{t+T_h}P_{bus}(j)\right)}{\left(\dfrac{T_h}{\Delta t}\right)} + b$$

La valeur ΔSoE est une entrée de la fonction 520 et représente la différence entre SoEref et SoE, déterminée par le comparateur 502 (et exprimée en pourcentage). Cette caractéristique de dépendance du ΔSoE permet de contrôler les excursions de SoE par le changement de λ1 sur l'optimisation de la fonction 521.

Le calcul de λ1 fait intervenir la puissance 'Pbus' échantillonnée à chaque pas de temps Δt dans un horizon de prédiction Th. La fonction 522 fournit à la fonction 520 la distribution de puissance Pbus basée sur des données acquises dans le passé.

Une approche proposée est basée sur l'hypothèse que le comportement sur un horizon de temps passé sera reproduit dans l'horizon futur. Cette hypothèse permet d'obtenir des résultats qui assurent les contraintes de fonctionnement et permettent que le système de gestion d'énergie profite de la récupération en freinage de manière optimum pour augmenter le rendement du véhicule. Pour l'obtention de cette distribution de puissance, il est nécessaire à la partie logique 5 d'avoir une mémoire pour stocker les valeurs de puissance 'Pbus'.

Par conséquent le co-état $\lambda 1$ calculé interagit sur l'optimisation de façon à ramener le SoE à son niveau SoEref sans dégrader l'optimisation. Deux paramètres importants pour le calcul de $\lambda 1$ sont l'horizon de prédiction Th et la périodicité du calcul $\Delta t$. Le choix de l'horizon de prédiction peut être fait sur une plage de temps de quelques dizaines de secondes à quelques minutes. Un horizon plus court privilégie un profil de roulage avec des changements de niveau de puissance (accélérations) fréquents, tandis qu'un horizon plus long est meilleur pour un profil de roulage avec une puissance plus constante. Une durée d'horizon de prédiction appropriée permet d'anticiper de possibles récupérations d'énergie au freinage.

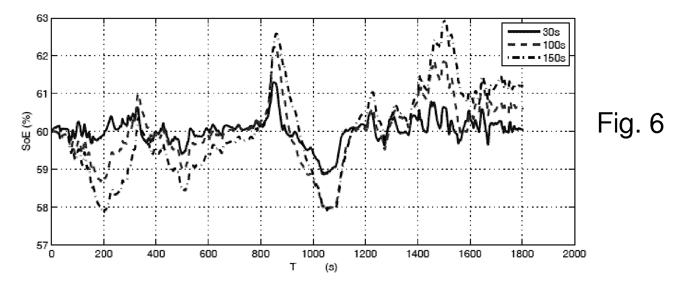

Les figures 4 à 6 illustrent des simulations d'états d'énergie, respectivement en cycles urbain, routier et autoroutier, pour différentes valeurs d'horizon de prédiction. Ces figures illustrent bien la sensibilité de l'état de charge dans le temps en fonction de la durée de l'horizon de prédiction.

En analysant le cycle de conduite, la partie logique peut avantageusement réaliser le calcul de $\lambda 1$ avec une prédiction sur une fenêtre de temps adaptée de façon dynamique au style de conduite déterminé.

Le calcul de $\lambda 1$ peut être réalisé à une fréquence inférieure ou égale à la fréquence de calcul de Ppac* par la fonction d'optimisation 521. $\lambda 1$ présente une dynamique de calcul inférieure ou égale à la dynamique de calcul de Ppac*.

Chaque itération de calcul de $\lambda 1$ est réalisée à partir d'une valeur de $\Delta SoE$ et d'une nouvelle prédiction de la valeur Pbus.

Le fonctionnement de la fonction 501 de définition de la valeur de référence SoEref peut être le suivant.

La valeur de SoEref peut être déterminée par l'utilisation d'une valeur fixe dans le cas le plus simple.

La valeur de SoEref peut aussi être déterminée par une optimisation hors ligne. L'optimisation hors ligne peut notamment être réalisée en utilisant un système de géolocalisation. Le système de géolocalisation peut déterminer un profil routier que l'utilisateur souhaite emprunter. Le système de géolocalisation peut déterminer la vitesse probable du véhicule pour ce profil routier.

Le calculateur 5 peut déterminer un profil de vitesse optimal pour ce profil routier, à partir du profil routier et des contraintes de conduite correspondante. À partir de ce profil de vitesse optimale et de la capacité d'inversion de la modélisation de la chaîne de traction, le calculateur 5 peut déterminer le profil de puissance électrique correspondant au profil de vitesse optimal. Une telle méthode est notamment détaillée dans le document 'Vehicle trajectory optimization for application in ecodriving' publié dans le cadre de la conférence 'Vehicle Power and Propulsion Conference (VPPC)' IEEE 2011, pp. 1-6, par MM Mensing, Trigui et Bideaux.

Ce profil de puissance peut être issu d'une autre optimisation hors ligne, utilisant par exemple la méthode de programmation dynamique. Cette méthode permet d'identifier l'optimum global de la consommation à partir de la répartition optimale de la puissance entre la PAC 3 et la batterie 2. Cette méthode fournit également un profil optimisé des valeurs SoE permettant de déterminer la valeur SoEref.

Avec un profil optimisé de SoE pour déterminer SoEref, le calcul de $\lambda$ permet de corriger la réponse de l'optimisation en ligne lorsque le système est sujet à des perturbations.

La valeur SoEref peut également être modifiée en fonction de l'altitude du véhicule. L'énergie potentielle du véhicule change en fonction de l'altitude :

lors d'une montée, le véhicule consomme de l'énergie supplémentaire mais augmente son énergie potentielle ;
lors d'une descente, l'énergie potentielle du véhicule peut être au moins partiellement récupérée par régénération en freinage.

L'altitude du véhicule peut être déterminée soit par un appareil de mesure d'altitude (altimètre) soit à partir de la position fournie par le dispositif de géolocalisation du véhicule. La relation suivante fournit un exemple de détermination de la fonction de la valeur de SoEref en fonction de l'altitude.

$$SoEref(t) = SoE_{h=0} - [(SoE_{h=0} - SoE_{min}) * h(t) / hmax ]$$

où $SoE_{h=0}$ est la valeur de SoEref à l'altitude de référence, h(t) est l'altitude à l'instant t, et hmax est l'altitude maximale définie. Pour h(t) = hmax, la valeur de SoEref vaudra la valeur minimale $SoE_{min}$.

Des simulations ont montré que la prise en compte de l'altitude pour la détermination de la valeur SoEref permet d'optimiser la récupération au freinage car le SoE atteint sa valeur maximale de 80% pendant la descente. La prise en compte de la batterie autorise la batterie à se décharger davantage pendant la montée pour permettre une plus grande recharge à la descente.

La valeur SoEref peut également être modifiée en fonction de la vitesse du véhicule, pour tenir compte de l'énergie cinétique de celui-ci.

Afin d'améliorer la robustesse du procédé de commande, une fonction de robustesse 510 est avantageusement interposée entre le comparateur 502 et la fonction de correction de prévisions 520. La fonction de robustesse 510 peut réaliser par exemple une correction de type PI (proportionnel-intégrateur) sur le signal ΔSoE, ou réaliser une commande de type Hinfini à partir du signal ΔSoE. Du fait de la dynamique lente de l'état d'énergie de la batterie 2, à la fréquence d'échantillonnage des fonctions 501 et 510 peut être inférieure ou égale à la fréquence de calcul de λ1.

L'équation modélisant la consommation de la PAC 3 en fonction de la puissance électrique Ppac est ici un polynôme de degré 2. On peut également envisager un modèle de consommation basé sur tout autre type de fonction résolvable algébriquement.

## Revendications

1. Motorisation de véhicule automobile, comprenant :

   - une pile à combustible (3) comportant une commande non-linéaire plate dont l'entrée de commande Ppac* est une consigne de la puissance électrique à délivrer par la pile à combustible;
   - un système de stockage d'énergie électrique (2) réversible;
   - un moteur électrique (4) configuré pour entraîner les roues d'un véhicule ;
   - un élément de connexion électrique (11) configuré pour connecter sélectivement la pile à combustible et/ou le système de stockage d'énergie au moteur électrique (4) ;
   - un circuit de commande (5,31) :

     - mémorisant un modèle de la consommation de dihydrogène de la pile à combustible en fonction de la puissance électrique délivrée par cette pile à combustible ;
     - configuré pour appliquer une consigne de puissance Ppac* sur la commande non-linéaire plate de la pile à combustible,
     - configuré pour commander l'élément de connexion électrique (11) pour recharger le système de stockage d'énergie électrique (2) lorsque la valeur de la consigne de puissance Ppac* est supérieure à la puissance appelée par le moteur électrique (4) ;

   **Caractérisée en ce que** :

   - le modèle de la consommation de dihydrogène de la pile à combustible est mémorisé sous forme de polynôme du second degré g(Ppac*)= a*Ppac*$^2$ + b*Ppac* + c, avec a, b et c des constantes ;
   - le circuit de commande est configuré pour calculer un coefficient de répartition de puissance λ1 entre la pile à combustible et le système de stockage d'énergie électrique

   $$\lambda_1 = \frac{2a\left(\dfrac{\Delta SoE.\varepsilon_{max}}{\Delta t} - \sum_{j=t}^{t+T_h} P_{bus}(j)\right)}{\left(\dfrac{T_h}{\Delta t}\right)} + b$$

   avec ΔSoE la différence entre une cible de quantité d'énergie dans le système de stockage (2) et la quantité d'énergie actuelle du système de stockage exprimé en pourcentage, Pbus(j) des valeurs de mesure de puissance électrique échangée entre le moteur électrique (4) et l'élément de connexion électrique (11), Δt un intervalle temporel séparant deux mesures successives de Pbus(j), Th la durée de fonctionnement du moteur électrique prise en compte pour le calcul de λ1, ε$_{max}$ la quantité d'énergie maximale pouvant être stockée dans le système de stockage d'énergie électrique;
   - le circuit de commande est configuré pour appliquer la consigne de puissance Ppac*=(λ1-b)/(2a) sur la commande non-linéaire plate de la pile à combustible.

2. Motorisation de véhicule automobile selon la revendication 1, dans laquelle le circuit de commande est configuré pour déterminer une amplitude de variation entre des valeurs Pbus(j) et configuré pour baisser la valeur de Th lors d'une augmentation de l'amplitude de variation et configuré pour augmenter la valeur de Th lors d'une diminution de l'amplitude de variation.

**EP 2 872 356 B1**

**3.** Motorisation de véhicule automobile selon la revendication 1 ou 2, dans laquelle ladite durée Th est comprise entre 20 et 600 secondes.

**4.** Motorisation de véhicule automobile selon l'une quelconque des revendications précédentes, dans laquelle ledit intervalle Δt est compris entre 1 seconde et 20 secondes.

**5.** Motorisation de véhicule automobile selon l'une quelconque des revendications précédentes, dans laquelle le rapport Th/Δt est au moins égal à 5.

**6.** Motorisation de véhicule automobile selon l'une quelconque des revendications précédentes, dans laquelle le circuit de commande est configuré pour calculer la valeur ΔSoE avec une fréquence inférieure à la fréquence des mesures de puissance Pbus(j).

**7.** Motorisation de véhicule automobile selon l'une quelconque des revendications précédentes, dans laquelle la cible de quantité d'énergie est comprise entre 40 et 80% de la quantité d'énergie maximale du système de stockage d'énergie électrique.

**8.** Motorisation de véhicule automobile selon l'une quelconque des revendications précédentes, dans laquelle le système de stockage d'énergie électrique inclut une batterie d'accumulateurs électrochimiques (2).

**9.** Motorisation de véhicule automobile selon l'une quelconque des revendications précédentes, dans laquelle la pile à combustible (3) comprend :

- un réacteur (300) ;
- une pompe (340), ladite pompe étant configurée pour comprimer de l'air à la cathode du réacteur, ladite pompe incluant un moteur électrique et un rotor de compression entraîné en rotation par le moteur électrique de la pompe ;
- une vanne (341) de régulation du débit d'air à travers le réacteur ;
- la commande non linéaire plate de la pile à combustible étant configurée pour convertir la consigne de puissance Ppac* respectivement en une tension de consigne du moteur électrique de la pompe et en une tension de consigne de la vanne.

**Patentansprüche**

**1.** Motorisierung eines Kraftfahrzeugs, umfassend:

- eine Brennstoffzelle (3), die eine flache nichtlineare Steuerung aufweist, deren Steuerungseingang Ppac* ein Sollwert der von der Brennstoffzelle zu liefernden elektrischen Leistung ist;
- ein reversibles System zur Speicherung elektrischer Energie (2);
- einen Elektromotor (4), der konfiguriert ist, um die Räder eines Fahrzeugs anzutreiben;
- ein Element zur elektrischen Verbindung (11), das konfiguriert ist, um selektiv die Brennstoffzelle und/oder das System zur Speicherung von Energie mit dem Elektromotor (4) zu verbinden;
- eine Steuerschaltung (5,31):

  - welche ein Modell des Dihydrogenverbrauchs der Brennstoffzelle entsprechend der von dieser Brennstoffzelle gelieferten elektrischen Leistung speichert;
  - die konfiguriert ist, um einen Leistungssollwert Ppac* auf die flache nichtlineare Steuerung der Brennstoffzelle anzuwenden,
  - die konfiguriert ist, um das Element zur elektrischen Verbindung (11) zu steuern, um das System zur Speicherung elektrischer Energie (2) aufzuladen, wenn der Leistungssollwert Ppac* höher als die vom Elektromotor (4) abgerufene Leistung ist;

**dadurch gekennzeichnet, dass**:

- das Modell des Dihydrogenverbrauchs der Brennstoffzelle in Form eines Polynoms zweiten Grades g(Ppac*) = a*Ppac*² + b*Ppac* + c, wobei a, b und c Konstanten sind, gespeichert wird;
- die Steuerschaltung konfiguriert ist, um einen Koeffizienten zur Leistungsverteilung λ1 zwischen der Brennstoffzelle und dem System zur Speicherung elektrischer Energie zu berechnen

$$\lambda 1 = \frac{2a\left(\frac{\Delta SoE.\,\varepsilon_{max}}{\Delta t} - \sum_{j=t}^{t+T_h} P_{bus}(j)\right)}{\left(\frac{T_h}{\Delta t}\right)} + b$$

wobei $\Delta$SoE der Unterschied zwischen einem Ziel der Energiemenge im Speichersystem (2) und der aktuellen Energiemenge des Speichersystems, angegeben in Prozent, ist, Pbus(j) Messwerte von zwischen dem Elektromotor (4) und dem Element zur elektrischen Verbindung (11) ausgetauschter elektrischer Leistung sind, $\Delta$t ein Zeitintervall ist, das zwei sukzessive Messungen von Pbus(j) voneinander trennt, Th die Betriebsdauer des Elektromotors, die für die Berechnung von $\lambda$1 berücksichtigt wird, ist, $\varepsilon$max die maximale Energiemenge ist, die im System zur Speicherung elektrischer Energie gespeichert werden kann;
- die Steuerschaltung konfiguriert ist, um den Leistungssollwert Ppac*=($\lambda$1-b)/(2a) auf die flache nichtlineare Steuerung der Brennstoffzelle anzuwenden.

**2.** Motorisierung eines Kraftfahrzeugs nach Anspruch 1, bei der die Steuerschaltung konfiguriert ist, um eine Schwankungsamplitude zwischen Werten von Pbus(j) zu bestimmen, und konfiguriert ist, um den Wert von Th bei einer Erhöhung der Schwankungsamplitude zu senken, und konfiguriert ist, um den Wert von Th bei einer Verringerung der Schwankungsamplitude zu erhöhen.

**3.** Motorisierung eines Kraftfahrzeugs nach Anspruch 1 oder 2, bei der die genannte Dauer Th zwischen 20 und 600 Sekunden liegt.

**4.** Motorisierung eines Kraftfahrzeugs nach einem der vorangehenden Ansprüche, bei der das genannte Intervall $\Delta$t zwischen 1 Sekunde und 20 Sekunden liegt.

**5.** Motorisierung eines Kraftfahrzeugs nach einem der vorangehenden Ansprüche, bei der das Verhältnis Th/$\Delta$t mindestens gleich 5 ist.

**6.** Motorisierung eines Kraftfahrzeugs nach einem der vorangehenden Ansprüche, bei der die Steuerschaltung konfiguriert ist, um den Wert $\Delta$SoE mit einer Frequenz, die niedriger als die Frequenz der Leistungsmessungen Pbus(j) ist, zu messen.

**7.** Motorisierung eines Kraftfahrzeugs nach einem der vorangehenden Ansprüche, bei der das Ziel der Energiemenge zwischen 40 und 80 % der maximalen Energiemenge des Systems zur Speicherung elektrischer Energie liegt.

**8.** Motorisierung eines Kraftfahrzeugs nach einem der vorangehenden Ansprüche, bei der das System zur Speicherung elektrischer Energie eine Batterie aus elektrochemischen Akkumulatoren (2) umfasst.

**9.** Motorisierung eines Kraftfahrzeugs nach einem der vorangehenden Ansprüche, bei der die Brennstoffzelle (3) umfasst:

- einen Reaktor (300);
- eine Pumpe (340), wobei die genannte Pumpe konfiguriert ist, um die Luft an der Kathode des Reaktors zu verdichten, wobei die genannte Pumpe einen Elektromotor und einen Verdichtungsrotor, der vom Elektromotor der Pumpe in Drehung versetzt wird, enthält;
- ein Ventil (341) zur Regelung des Luftstroms durch den Reaktor;
- wobei die flache nichtlineare Steuerung der Brennstoffzelle konfiguriert ist, um den Leistungssollwert Ppac* respektive in eine Sollspannung des Elektromotors der Pumpe und in eine Sollspannung des Ventils umzuwandeln.

**Claims**

**1.** Automotive vehicle drive unit, comprising:

**EP 2 872 356 B1**

- a fuel cell (3) comprising a flat non-linear control whose control input Pfc* is a setpoint of the electrical power to be delivered by the fuel cell;
- a reversible electrical energy storage system (2);
- an electric motor (4) configured to propel the wheels of a vehicle;
- an electrical connection element (11) configured to selectively connect the fuel cell and/or the energy storage system to the electric motor (4);
- a control circuit (5,31):

    - storing a model of the consumption of dihydrogen of the fuel cell as a function of the electrical power delivered by this fuel cell;
    - configured to apply a power setpoint Pfc* to the flat non-linear control of the fuel cell,
    - configured to control the electrical connection element (11) so as to recharge the electrical energy storage system (2) when the value of the power setpoint Pfc* is greater than the power demanded by the electric motor (4);

**characterized in that**:

- the model of the consumption of dihydrogen of the fuel cell is stored in the form of a second-degree polynomial

of a second-degree polynomial

$g(Pfc^*) = a*Pfc^{*2} + b*Pfc^* + c$, with a, b and c being constants;

with a, b and c being constants;
- the control circuit is configured to compute a coefficient of power distribution $\lambda 1$ between the fuel cell and the electrical energy storage system

$$\lambda_1 = \frac{2a\left(\dfrac{\Delta SoE.\varepsilon_{max}}{\Delta t} - \sum_{j=t}^{t+T_h} P_{bus}(j)\right)25}{\left(\dfrac{T_h}{\Delta t}\right)} + b$$

with $\Delta$SoE the difference between a target quantity of energy in the storage system (2) and the current quantity of energy of the storage system expressed as a percentage, Pbus(j) are measurement values of electrical power exchanged between the electric motor (4) and the electrical connection element (11), $\Delta$t is a time interval separating two successive measurements of Pbus(j), Th is the electric motor's duration of operation taken into account for the computation of $\lambda 1$, $\varepsilon_{max}$ is the maximum quantity of energy that can be stored in the electrical energy storage system;
- the control circuit is configured to apply the power setpoint Pfc*=($\lambda$1-b)/(2a) to the flat non-linear control of the fuel cell.

2. Automotive vehicle drive unit according to Claim 1, in which the control circuit is configured to determine an amplitude of variation between values Pbus(j) and configured to lower the value of Th upon an increase in the amplitude of variation and configured to increase the value of Th upon a decrease in the amplitude of variation.

3. Automotive vehicle drive unit according to Claim 1 or 2, in which said duration Th lies between 20 and 600 seconds.

4. Automotive vehicle drive unit according to any one of the preceding claims, in which said interval $\Delta$t lies between 1 second and 20 seconds.

5. Automotive vehicle drive unit according to any one of the preceding claims, in which the ratio Th/$\Delta$t is at least equal to 5.

6. Automotive vehicle drive unit according to any one of the preceding claims, in which the control circuit is configured to compute the value $\Delta$SoE with a lower frequency than the frequency of the power measurements Pbus(j).

17

7. Automotive vehicle drive unit according to any one of the preceding claims, in which the target quantity of energy lies between 40 and 80% of the maximum quantity of energy of the electrical energy storage system.

8. Automotive vehicle drive unit according to any one of the preceding claims, in which the electrical energy storage system includes an electrochemical accumulator battery (2).

9. Automotive vehicle drive unit according to any one of the preceding claims, in which the fuel cell (3) comprises:

- a reactor (300);
- a pump (340), said pump being configured to compress air at the cathode of the reactor, said pump including an electric motor and a compression rotor rotated by the electric motor of the pump;
- a valve (341) for regulating the air flowrate through the reactor;
- the flat nonlinear control of the fuel cell being configured to convert the power setpoint Pfc* respectively into a setpoint voltage of the electric motor of the pump and into a setpoint voltage of the valve.

Fig. 1

Fig. 2

## Fig. 3

## Fig. 4

## Fig. 5

Fig. 6

## RÉFÉRENCES CITÉES DANS LA DESCRIPTION

**Documents brevets cités dans la description**

- US 2010316921 A

**Littérature non-brevet citée dans la description**

- **MM FLIESS ; LÉVINE ; MARTIN ; ROUCHON.** Flatness and defect of nonlinear systems : Introductory theory and examples. *International Journal of Control,* 1995, vol. 61, 1327-1361

- Vehicle trajectory optimization for application in eco-driving. **MM MENSING ; TRIGUI ; BIDEAUX.** le cadre de la conférence 'Vehicle Power and Propulsion Conference (VPPC). IEEE, 2011, 1-6